# EUROPEAN PATENT APPLICATION

(11) **EP 4 439 965 A1**
(43) Date of publication of application: **02.10.2024**
(21) Application number: 24166380.6
(22) Date of filing: 26.03.2024
(51) Int. Cl.: H02M 7/5387, H02M 7/483, H02M 1/12, H02M 1/44, H02M 1/34, H02P 27/08

(54) **INVERTER APPARATUS AND CONTROL METHOD THEREOF**

(30) Priority: 27.03.2023 CN 202310339681
(71) Applicant: Huawei Digital Power Technologies Co., Ltd., Futian District, Shenzhen, Guangdong 518043 (CN)
(72) Inventor: LU, Fenglong, Shenzhen, 518043 (CN); LIU, Shuai, Shenzhen, 518043 (CN); CHEN, Dong, Shenzhen, 518043 (CN); SHI, Lei, Shenzhen, 518043 (CN)
(74) Representative: Epping - Hermann - Fischer

(57) **Abstract**

This application provides an inverter apparatus and a control method thereof. The inverter apparatus includes a direct current bus, a bus capacitor, an inverter bridge arm, a filter circuit, a switch unit, and a controller. The inverter bridge arm is connected to a positive direct current bus and a negative direct current bus, and the filter circuit is connected between the inverter bridge arm and a user load. In a working scenario in which the inverter apparatus switches between on-grid operation and off-grid operation, when the working scenario is on-grid operation and off-grid operation with a balanced load, an inverter uses a common-mode injection modulation mode; and when the working scenario is off-grid operation with an unbalanced load, the inverter uses a common SPWM modulation mode. This application is implemented, to improve working efficiency of the inverter in more working scenarios, and the implementation is simple, stable, reliable, and load-friendly.

## Description

### TECHNICAL FIELD

This application relates to the field of power electronics technologies, and in particular, to an inverter apparatus and a control method thereof.

### BACKGROUND

An energy storage inverter is a common device in a photovoltaic power generation system and an energy storage system. Generally, based on a power consumption requirement of a user, the energy storage inverter may run in two working conditions: on-grid operation and off-grid operation with loads, and may switch between a plurality of working conditions.

In the conventional technology, an energy storage inverter usually uses a multi-level inverter circuit. Particularly, an application scenario of an energy storage inverter having an on/off-grid switching function includes off-grid operation with an unbalanced load. Therefore, an N wire of a load needs to be controlled. As a result, the multi-level inverter circuit can only perform common SPWM modulation, and efficiency of the inverter having the on/off-grid switching function is low.

### SUMMARY

This application provides an inverter apparatus and a control method thereof, to improve conversion efficiency of the inverter apparatus having an on/off-grid switching function. This implementation is simple and is load-friendly.

According to a first aspect, this application provides an inverter apparatus. The inverter apparatus includes a direct current bus, a bus capacitor, an inverter bridge arm, a filter circuit, a switch unit, and a controller. The direct current bus is connected to the inverter bridge arm, the bus capacitor is connected between a positive direct current bus and a negative direct current bus, the filter circuit is connected between the inverter bridge arm and a user load, and a common end of a filter capacitor group of the filter circuit is configured to connect to an N wire of the user load by using the switch unit. An inverter provided in this application may work in an on-grid or off-grid application scenario, and switch an inverting modulation mode based on a more specific difference in the application scenario, so as to improve efficiency of the inverter. Specific implementation of the inverter is implemented by the foregoing inverter apparatus. In this application, a modulation mode of a multi-level inverter may be flexibly selected based on different application scenarios, and a modulation mode in which the inverter bridge arm uses common-mode injection modulation is added. This improves overall working efficiency of the inverter, and has high flexibility and simple implementation.

With reference to the first aspect, in a first possible implementation, the common end of the filter capacitor group of the filter circuit is connected to a midpoint of the bus capacitor, so that an N wire of a user load may be connected to the midpoint of the bus capacitor. This facilitates stable working of a user's loads with various characteristics.

With reference to the first aspect, in a second possible implementation, the inverter apparatus further includes a fourth bridge arm, where an input end of the fourth bridge arm is separately connected to a positive direct current bus and a negative direct current bus, and the common end of the filter capacitor group of the filter circuit is further configured to connect to an output end of the fourth bridge arm, so that the N wire of the user load can be connected to the output end of the fourth bridge arm.

With reference to the first possible implementation of the first aspect or the second possible implementation of the first aspect, in a third possible implementation, the filter circuit includes a first filter inductor unit and a filter capacitor unit, the first filter inductor unit includes three filter inductors, and first ends of the three filter inductors of the first filter inductor unit are sequentially connected to three output ends of the inverter bridge arm. The filter capacitor unit includes the filter capacitor group, the filter capacitor group includes three filter capacitors, first ends of the three filter capacitors of the filter capacitor group are sequentially connected to second ends of the three filter inductors of the first filter inductor unit, and second ends of the three filter capacitors of the filter capacitor group are connected to the common end of the filter capacitor group. A first end of the switch unit is connected to the midpoint of the bus capacitor by using the common end of the filter capacitor group, and a second end of the switch unit is configured to connect to the N wire of the user load. The first filter inductor unit and the filter capacitor unit, as parts of the filter circuit, can absorb a high-frequency harmonic wave generated by the inverter bridge arm, to reduce high-frequency noise of the load.

With reference to the first possible implementation of the first aspect or the second possible implementation of the first aspect, in a fourth possible implementation, the filter circuit includes a first filter inductor unit, a filter capacitor unit, and the fourth bridge arm. The first filter inductor unit includes three filter inductors, and first ends of the three filter inductors of the first filter inductor unit are sequentially connected to three output ends of the inverter bridge arm. The filter capacitor unit includes the filter capacitor group, the filter capacitor group includes three filter capacitors, first ends of the three filter capacitors of the filter capacitor group are sequentially connected to second ends of the three filter inductors of the first filter inductor unit, and second ends of the three filter capacitors of the filter capacitor group are connected to the common end of the filter capacitor group. The fourth bridge arm is connected between the positive direct current bus and the negative direct current bus, the output end of the fourth bridge arm is connected to a first end of the switch unit and the common end of the filter capacitor group through an inductor, and a second end of the switch unit is configured to connect to the N wire of the user load.

With reference to the third possible implementation of the first aspect or the fourth possible implementation of the first aspect, in a fifth possible implementation, the filter capacitor unit further includes a safety capacitor group. The safety capacitor group includes three filter capacitors, first ends of the three filter capacitors of the safety capacitor group are sequentially configured to connect to three input ends of the user load, and second ends of the three filter capacitors of the safety capacitor group are connected to a common end of the safety capacitor group. A better EMC suppression effect can be achieved by using the safety capacitor group, and power consumption safety of the user can be improved.

With reference to the fifth possible implementation of the first aspect, in a sixth possible implementation, the common end of the safety capacitor group is connected to the second end of the switch unit.

With reference to the fifth possible implementation of the first aspect, in a seventh possible implementation, the common end of the safety capacitor group is connected to the first end of the switch unit.

With reference to the fifth possible implementation of the first aspect or the sixth possible implementation of the first aspect, in an eighth possible implementation, the common end of the safety capacitor group is connected to the first end or the second end of the switch unit by using a capacitor.

With reference to any one of the fifth to the eighth possible implementations of the first aspect, in a ninth possible implementation, the filter circuit further includes a second filter inductor unit, the second filter inductor unit includes three filter inductors, and the three filter inductors of the second filter inductor unit are respectively connected between the first ends of the three filter capacitors of the filter capacitor group and the first ends of the three filter capacitors of the safety capacitor group.

With reference to the third possible implementation of the first aspect, in a ninth possible implementation, an inductor is connected in series between the first end of the switch unit and the midpoint of the bus capacitor, and an inductor is connected in series between the second end of the switch unit and the N wire of the user load. In this implementation, the two filter inductors connected in series can enhance a filtering process in respective closed loops.

With reference to any one of the first to the ninth possible implementations of the first aspect, in a tenth possible implementation, the inverter apparatus includes two groups of clamp diodes, any group in the two groups of clamp diodes includes two diodes connected in series, positive electrodes of the two diodes are connected to the positive direct current bus, negative electrodes of the two diodes are connected to the negative direct current bus, and the first end and the second end of the switch unit are respectively connected between the two groups of clamp diodes. In this implementation, normal and stable running of the inverter during on/off-grid working scenario switching can be ensured, and working efficiency of the inverter in a plurality of working scenarios of the inverter can be improved, which is load-friendly, stable, and reliable.

With reference to the second possible implementation of the first aspect, in an eleventh possible implementation, the fourth bridge arm includes a two-level bridge arm or a multi-level bridge arm.

With reference to the eleventh possible implementation of the first aspect, in a twelfth possible implementation, the output end of the fourth bridge arm is connected to the midpoint of the bus capacitor through an inductor. In this implementation, a loading capability of a positive and negative half-bus voltage equalization circuit for some specific half-wave energy loads can be increased, and a bus ripple can also be reduced. This improves reliability and applicability of an entire system.

It should be understood that mutual reference can be made to implementations and beneficial effects of the foregoing plurality of aspects in this application.

### BRIEF DESCRIPTION OF DRAWINGS

FIG. 1 is a schematic diagram of a working system of an inverter according to an embodiment of this application;
FIG. 2 is a schematic diagram of a working principle of an inverter circuit according to an embodiment of this application;
FIG. 3 is another schematic diagram of a working principle of an inverter circuit according to an embodiment of this application;
FIG. 4 shows Embodiment 1 of a circuit topology according to this application;
FIG. 5 shows Embodiment 2 of a circuit topology according to this application;
FIG. 6 shows Embodiment 3 of a circuit topology according to this application;
FIG. 7 shows Embodiment 4 of a circuit topology according to this application;
FIG. 8 shows Embodiment 5 of a circuit topology according to this application;
FIG. 9 shows Embodiment 6 of a circuit topology according to this application;
FIG. 10 shows Embodiment 7 of a circuit topology according to this application;
FIG. 11 shows Embodiment 8 of a circuit topology according to this application;
FIG. 12 shows Embodiment 9 of a circuit topology according to this application;
FIG. 13 shows Embodiment 10 of a circuit topology according to this application; and
FIG. 14 shows Embodiment 11 of a circuit topology according to this application.

### DESCRIPTION OF EMBODIMENTS

An inverter circuit provided in this application is a direct current (direct current, DC)/alternating current (alternating current, AC) conversion circuit, and is applicable to a plurality of types of power generation devices such as a photovoltaic power generation device or a wind power generation device, and power supply for different types of power-consuming devices (for example, a power grid, a household device, or industrial and commercial power-consuming devices). The inverter circuit may be applied to the automotive field and the microgrid field, or may be applied to different application scenarios such as a pure energy storage power supply application scenario and a photovoltaic-energy storage hybrid power supply application scenario.

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The following further describes implementations of the technical solutions of this application in detail with reference to the accompanying drawings.

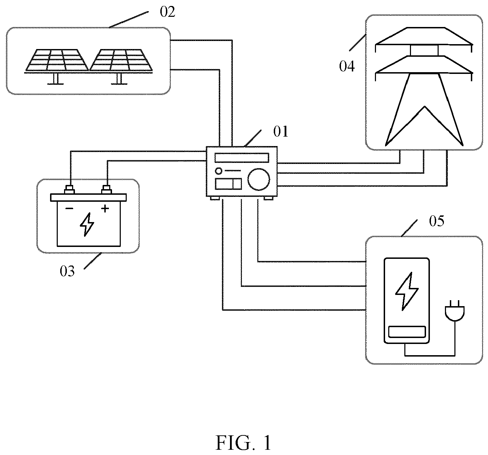

FIG. 1 is a schematic diagram of a working system of an inverter having an on/off-grid switching function according to this application. The schematic diagram of the working system of the inverter provided in this application includes an inverter 01, a photovoltaic power generation module 02, an energy storage device 03, an alternating current power grid 04, and an off-grid load 05. The photovoltaic power generation module 02, the energy storage device 03, the alternating current power grid 04, and the off-grid load 05 are separately connected to the inverter 01. In a photovoltaic power supply application scenario, the photovoltaic power generation module 02 includes at least one group of photovoltaic arrays, and the photovoltaic array may include a plurality of photovoltaic panels that are connected in series. The photovoltaic power generation module 02 is configured to convert solar energy into direct current energy, and transfer the direct current energy to the inverter 01. In an energy storage power supply application scenario, the energy storage device 03 includes at least one energy storage battery (for example, a lithium-ion battery and a lead-acid battery) or a supercapacitor (which is also referred to as an electrochemical capacitor), which is configured to store electric energy and serves as a supplementary device for a direct current in the working system of the inverter.

The alternating current power grid 04 is configured to receive an alternating current converted by the inverter, or is configured to charge the energy storage device 03. The off-grid load 05 may be a balanced off-grid load, or may be an unbalanced off-grid load. The inverter 01 is a core device in the working system of the inverter having the on/off-grid switching function provided in this application, and is configured to perform DC/AC conversion. In many scenarios, an alternating current output by the inverter is not used for a single purpose. Sometimes, the inverter is directly on-grid, and the alternating current generated by the inverter is directly transmitted to the alternating current power grid. Sometimes, the inverter is off-grid, and the alternating current generated by the inverter is supplied to the off-grid load. The inverter provided in this application may flexibly switch modulation modes of an inverter circuit of the inverter based on different power consumption scenarios of a user, thereby improving inverter efficiency.

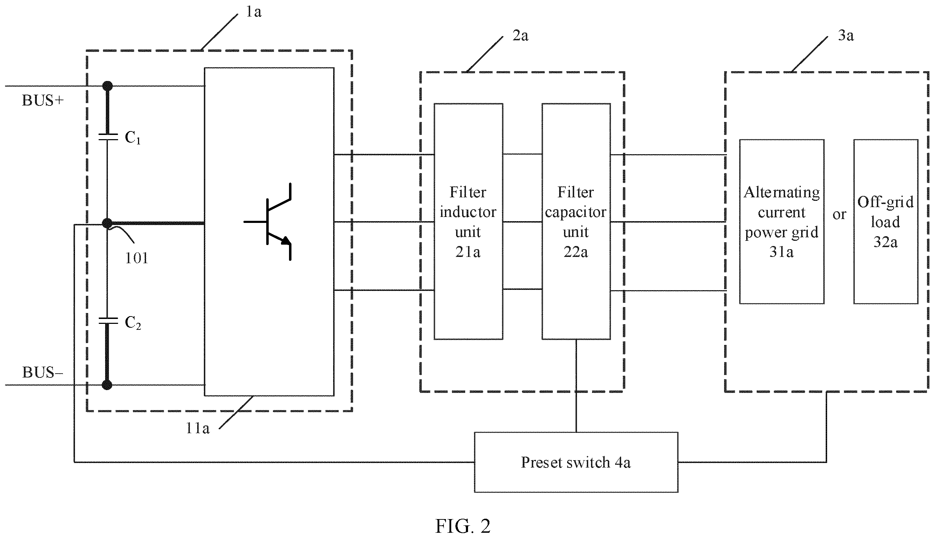

The following describes the inverter circuit provided in this application and a working principle of the inverter circuit with reference to FIG. 2 to FIG. 14.

FIG. 2 is a schematic diagram of a working principle of an inverter circuit of the inverter 01 in FIG. 1. The inverter circuit provided in this application includes an inverter module 1a, a filter module 2a, and a controllable switch unit 4a. For ease of describing the working principle of the inverter circuit, the power-consuming module 3a is introduced for description. The inverter module 1a is connected to a bus, the filter module 2a is connected between the inverter module 1a and the power-consuming module 3a, the controllable switch unit 4a is connected between a bus midpoint and the power-consuming module 3a, and the filter module 2a is further connected to the controllable switch unit 4a. The inverter module 1a includes an inverter bridge arm 11a, a positive direct current bus, a negative direct current bus, and two groups of bus capacitors connected in parallel to the positive direct current bus and the negative direct current bus. The inverter bridge arm 11a may be a three-bridge-arm inverter bridge. The inverter bridge arm 11a includes three input ends. A first input end, a second input end, and a third input end of the inverter bridge arm 11a are respectively connected to the positive bus, the negative bus, and the bus midpoint. An output end of the inverter bridge arm 11a is an output end of the inverter module 1a. Optionally, the inverter bridge arm 11a may alternatively be a two-bridge-arm inverter bridge. The filter module 2a includes a filter inductor unit 21a and a filter capacitor unit 22a. An input end of the filter inductor unit 21a is connected to the output end of the inverter module 1a, three first ends of the filter capacitor unit 22a are connected to three output ends of the filter inductor unit 21a, and the filter capacitor unit 22a is further connected to the power-consuming module 3a. A first end of the controllable switch unit 4a is connected to the bus midpoint, a second end of the controllable switch unit 4a is connected to the power-consuming module, and the controllable switch unit 4a is further connected to the filter module 2a. A power-consuming device or a power-consuming end of the power-consuming module 3a may be the alternating current power grid 31a, or may be the off-grid load 32a.

When the power-consuming end is the alternating current power grid 31a, the inverter 01 is in an on-grid working scenario, the inverter module 1a obtains direct current energy from a bus power supply, and converts a direct current into an alternating current, the filter module converts the alternating current into a smoother alternating current, the smooth alternating current is transmitted to the power-consuming module 3a for supplying electric energy to the alternating current power grid 31a, the controllable switch unit 4a is turned off, and the inverter bridge arm 11a is in a common-mode injection modulation mode. When the power-consuming end is the off-grid load 32a, the inverter 01 is in an off-grid working scenario, the inverter module 1a obtains direct current energy from the bus power supply, and converts a direct current into an alternating current, the filter module converts the alternating current into a smoother alternating current, and the smooth alternating current is transmitted to the power-consuming module 3a for supplying electric energy to the off-grid load 32a. In the off-grid scenario, the inverter circuit has the following two working states: 1. If the off-grid load 32a is a balanced off-grid load, the controllable switch unit 4a is turned off, and the inverter bridge arm 11a is in the common-mode injection modulation mode. 2. If the off-grid load 32a is an unbalanced off-grid load, the controllable switch unit 4a is turned on, and the inverter bridge arm 11a is in an SPWM modulation mode. Particularly, the common-mode injection modulation mode in this application includes an SVPWM modulation mode or a DPWM modulation mode.

A determining manner of the working state of the inverter 01 is not limited in this application, and only two determining manners are enumerated herein to help readers understand. For the inverter 01 in the on-grid or off-grid working state, for example, disturbance is performed on a frequency of a current output by the inverter, and whether the disturbed frequency of the current is restored is observed, so that whether the inverter is in the on-grid or off-grid working state can be determined. Specifically, if the frequency of the current is restored, it may be considered that the inverter is in the on-grid working state; and if the frequency of the current is not restored, it may be considered that the inverter is in the off-grid working state. For another example, if the inverter is in the off-grid working state, currents of phases output by the inverter may be measured, and whether the inverter is in an off-grid working state with a balanced load or an off-grid working state with an unbalanced load is determined by comparing amplitudes or valid values of the currents of the phases. Specifically, if a deviation of the amplitudes or valid values of the currents of the phases is within a specific range, it may be considered that the inverter is in the off-grid working state with a balanced load. If a deviation of amplitudes or valid values of currents of any two phases is greater than a specific range, it may be considered that the inverter is in the off-grid working state with an unbalanced load.

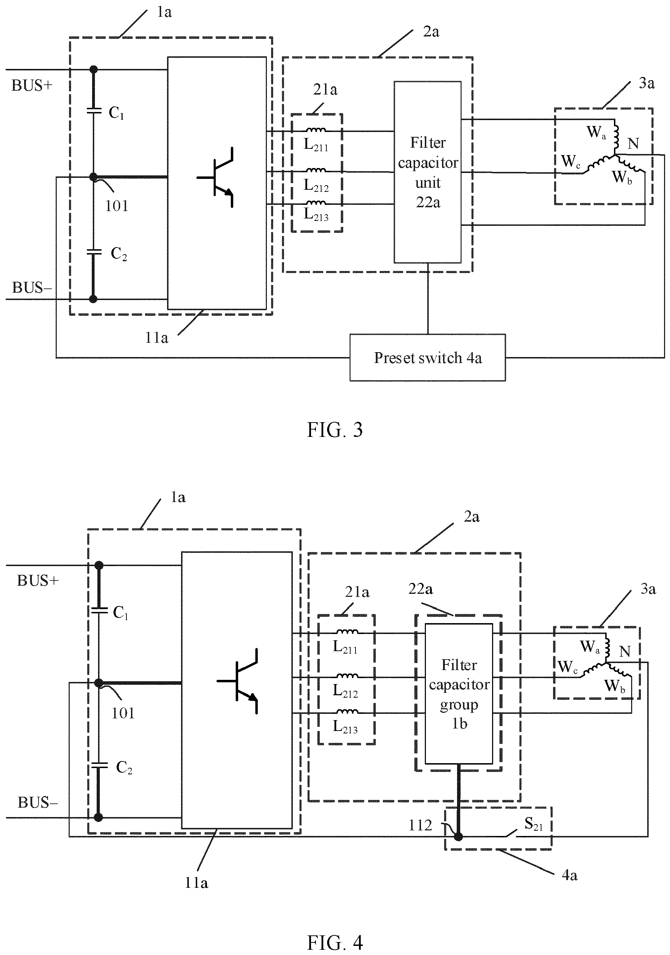

FIG. 3 is another schematic diagram of a working principle of an inverter circuit according to this application. Compared with FIG. 2, FIG. 3 specifically shows components included in the filter inductor unit 21a and the power-consuming module 3a. The schematic diagram of the working principle of the inverter circuit provided in this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The filter inductor unit 21a shown in FIG. 2 may include three filter inductors. An input end of a filter inductor *L*₂₁₁ is connected to a first output end of the inverter bridge arm, an input end of a filter inductor *L*₂₁₂ is connected to a second output end of the inverter bridge arm, and an input end of a third filter inductor *L*₂₁₃ is connected to a third output end of the inverter bridge arm. An output end of the filter inductor *L*₂₁₁, an output end of the filter inductor *L*₂₁₂, and an output end of the third filter inductor *L*₂₁₃ are sequentially connected to the three first ends of the filter capacitor unit 22a. When the inverter is in the on-grid working scenario or in the off-grid working scenario with a balanced load, turn-on/off of the controllable switch unit 4a and a working state of the inverter bridge arm 11a change. For ease of description, the power-consuming end of the power-consuming module 3a is described by using a three-phase off-grid load as an example. As shown in FIG. 3, the power-consuming module 3a includes a three-phase off-grid load, and a *Wₐ* phase input end, a *W_{b}* phase input end, and a *W_{c}* phase input end of the three-phase off-grid load are sequentially connected to the three first ends of the filter capacitor unit 22a. An N wire of the three-phase off-grid load is connected to the second end of the controllable switch unit 4 a.

When the three-phase off-grid load is a balanced load, the inverter 01 is in an off-grid scenario with a balanced load, the inverter module 1a obtains direct current energy from the bus power supply, and converts a direct current into an alternating current, the filter module 2a converts the alternating current into a smoother alternating current, the smooth alternating current is transmitted to the three-phase off-grid load for supplying electric energy to the three-phase off-grid load, the controllable switch unit 4a is turned off, and the inverter bridge arm 11a is in the common-mode injection modulation mode. When the three-phase off-grid load is an unbalanced load, the inverter 01 is in an off-grid working scenario with an unbalanced load, the inverter module 1a obtains direct current energy from the bus power supply, and converts a direct current into an alternating current, the filter module 2a converts the alternating current into a smoother alternating current, and the smooth alternating current is transmitted to the power-consuming module 3a for supplying electric energy to the three-phase off-grid load, the controllable switch unit 4a is turned on, and the inverter bridge arm 11a is in the SPWM modulation mode.

FIG. 4 shows Embodiment 1 of a circuit topology according to this application. The schematic diagram of the working principle of the inverter circuit provided in Embodiment 1 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3 a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to three first ends of a filter capacitor group 1b, and the N wire of the three-phase off-grid load is connected to the second end of the controllable switch unit 4a. The controllable switch unit 4a includes a switch *S*₂₁, and the switch *S*₂₁ is connected between the bus midpoint and the N wire of the three-phase off-grid load. The switch *S*₂₁ may be an insulated gate bipolar transistor, a metal-oxide semiconductor field-effect transistor, or a relay. The switch *S*₂₁ may be made of a silicon semiconductor material Si, a third-generation wide bandgap semiconductor material silicon carbide SiC, gallium nitride GaN, diamond, zinc oxide ZnO, or another material. The filter module 2a includes the filter inductor unit 21a and the filter capacitor unit 22a. The filter capacitor unit 22a includes a filter capacitor group, namely, the filter capacitor group 1b. In this embodiment of this application, the filter capacitor group 1b included in the filter capacitor unit 22a is connected between the filter inductor unit 21a and the power-consuming module 3a, the three first ends of the filter capacitor group 1b are sequentially connected to an output end of the filter inductor unit 21a and a three-phase input end of the power-consuming module 3a, and a capacitor common end of the filter capacitor group 1b is connected to a first end of the switch *S*₂₁ by using a node 112.

When the three-phase off-grid load is a balanced load, the switch *S*₂₁ is turned off. In this case, the N wire of the three-phase off-grid load is not connected to the bus midpoint, and the inverter bridge arm 11a may be in the common-mode injection modulation mode. This improves working efficiency of the inverter. When the three-phase off-grid load is an unbalanced load, the switch *S*₂₁ is turned on, and the inverter bridge arm 11a can use only the SPWM modulation mode due to a limitation on which the N wire of the three-phase off-grid load is connected to the bus midpoint. Regardless of whether the switch *S*₂₁ is turned off or turned on, the bus midpoint, the inverter bridge arm 11a, the filter inductor unit 21a, and the filter capacitor group 1b may form a closed loop, most high-frequency harmonic waves generated by the inverter bridge arm 11a are absorbed by a filter element in the loop, and therefore, the three-phase load is less affected by harmonic noise during working. When the switch *S*₂₁ is turned on, the three-phase off-grid load and the filter capacitor group 1b may form a closed loop, the filter capacitor group 1b may absorb a high-frequency harmonic wave generated by the load, and therefore, the three-phase off-grid load is less affected by harmonic noise. Therefore, in this embodiment of this application, working efficiency of the inverter can be improved in a plurality of working scenarios of the inverter. This is relatively load-friendly.

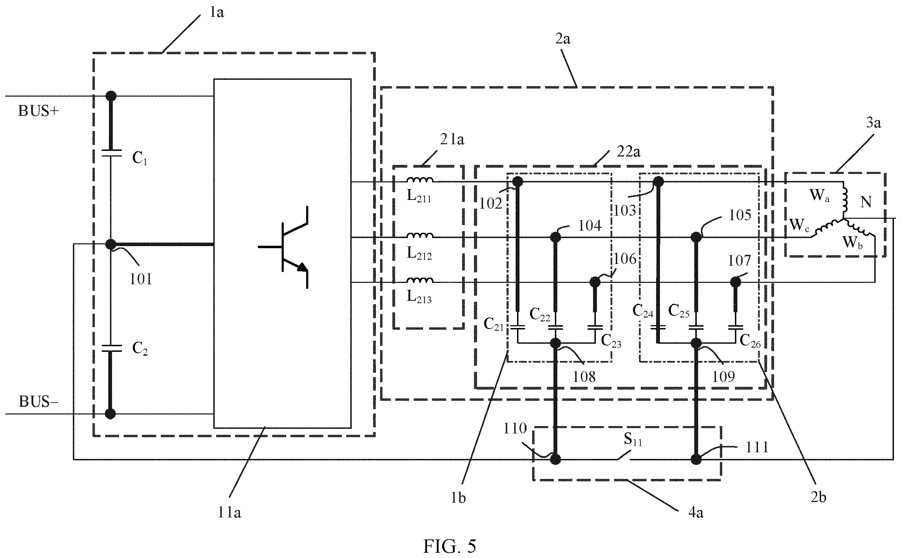

FIG. 5 shows Embodiment 2 of a circuit topology according to this application. Embodiment 2 specifically shows a circuit composition form of the filter capacitor group 1b, and on the basis of Embodiment 1, a safety capacitor group 2b is added. The safety capacitor group 2b is disposed on an input end side of a user load, so that a better EMC suppression effect can be achieved, and power consumption safety of the user can be improved. The circuit topology diagram provided in Embodiment 2 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to three first ends of the safety capacitor group 2b, and the N wire of the three-phase off-grid load is connected to the second end of the controllable switch unit 4a. The filter capacitor unit 22a shown in FIG. 3 may include the filter capacitor group 1b and the safety capacitor group 2b. The filter capacitor group 1b includes three capacitors *C*₂₁, *C*₂₂, and *C*₂₃, and the safety capacitor group 2b includes three capacitors *C*₂₄, *C*₂₅, and *C*₂₆. In the filter capacitor group 1b, a first end of the capacitor *C*₂₁ is connected between the output end of the filter inductor *L*₂₁₁ and the *Wₐ* phase input end of the three-phase off-grid load, a first end of the capacitor *C*₂₂ is connected between the output end of the filter inductor *L*₂₁₂ and the *W_{c}* phase input end of the three-phase off-grid load, a first end of the capacitor *C*₂₃ is connected between the output end of the third filter inductor *L*₂₁₃ and the *W_{b}* phase input end of the three-phase off-grid load, and second ends of the capacitors *C*₂₁, *C*₂₂, and *C*₂₃ are connected to a capacitor common end by using a node 108, and are connected to the controllable switch unit 4a by using a node 110. In the safety capacitor group 2b, a first end of the capacitor *C*₂₄ is connected between the output end of the filter inductor *L*₂₁₁ and the *Wₐ* phase input end of the three-phase off-grid load, a first end of the capacitor *C*₂₅ is connected between the output end of the filter inductor *L*₂₁₂ and the *W_{c}* phase input end of the three-phase off-grid load, a first end of the capacitor *C*₂₆ is connected between the output end of the third filter inductor *L*₂₁₃ and the *W_{b}* phase input end of the three-phase off-grid load, and second ends of the capacitors *C*₂₄, *C*₂₅, and *C*₂₆ are connected to a capacitor common end by using a node 109, and are connected to the controllable switch unit 4a by using a node 111. The controllable switch unit 4a may include a switch *S*₁₁. A first end of the switch *S*₁₁ is connected to the bus midpoint by using a node 101, the first end of the switch *S*₁₁ is further connected to the filter capacitor group 1b by using the node 110, a second end of the switch *S*₁₁ is connected to the N wire of the three-phase off-grid load, and the second end of the switch *S*₁₁ is further connected to the safety capacitor group 2b by using the node 111.

When the three-phase off-grid load is a balanced load, the switch *S*₁₁ is turned off. In this case, the N wire of the three-phase off-grid load is not connected to the bus midpoint, and the inverter bridge arm 11a may be in the common-mode injection modulation mode. This improves working efficiency of the inverter. When the three-phase off-grid load is an unbalanced load, the switch *S*₁₁ is turned on, and the inverter bridge arm 11a can use only the SPWM modulation mode due to a limitation on which the N wire of the three-phase off-grid load is connected to the bus midpoint. Regardless of whether the switch *S*₁₁ is turned off or turned on, the bus midpoint, the inverter bridge arm 11a, the filter inductor unit 21a, and the filter capacitor group 1b may form a closed loop, most high-frequency harmonic waves generated by the inverter bridge arm 11a are absorbed by a filter element in the loop, and therefore, the three-phase load is less affected by harmonic noise during working. Regardless of whether the switch *S*₁₁ is turned off or turned on, the three-phase off-grid load and the safety capacitor group 2b may form a closed loop. Even if the inverter switches a working scenario, that is, the switch *S*₁₁ performs conversion of turn-off or turn-on, the safety capacitor group 2b can absorb a high-frequency harmonic wave generated by the load or the switch. Therefore, the three-phase off-grid load is less affected by harmonic noise. Therefore, in this embodiment of this application, working efficiency of the inverter can be improved in a plurality of working scenarios of the inverter. This is load-friendly.

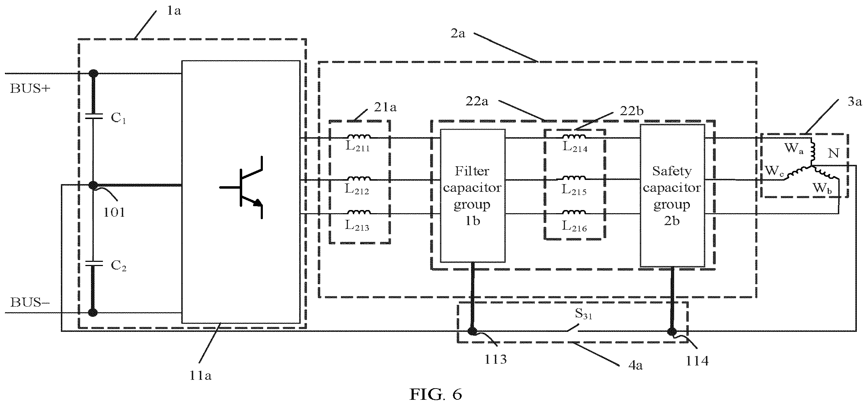

FIG. 6 shows Embodiment 3 of a circuit topology according to this application. For brevity of description, the filter capacitor group 1b and the safety capacitor group 2b in FIG. 6 are omitted. For detailed content, refer to FIG. 5. The schematic diagram of the working principle of the inverter circuit provided in Embodiment 3 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₃₁, and the switch *S*₃₁ is connected between the bus midpoint and the N wire of the three-phase off-grid load. The filter module 2a includes the filter inductor unit 21a and the filter capacitor unit 22a. The filter capacitor unit 22a includes two capacitor groups and a second filter inductor unit 22b. The two capacitor groups include the filter capacitor group 1b and the safety capacitor group 2b. For composition and a connection manner of the filter capacitor group 1b and the safety capacitor group 2b, refer to the descriptions in FIG. 5. In this embodiment of this application, the second filter inductor unit 22b is connected in series between the filter capacitor group 1b and the safety capacitor group 2b in the filter inductor unit 22a. The second filter inductor unit 22b includes an inductor *L*₂₁₄, an inductor *L*₂₁₅, and an inductor *L*₂₁₆. A first end of the inductor *L*₂₁₄, a first end of the inductor *L*₂₁₅, and a first end of the inductor *L*₂₁₆ are sequentially connected to the three first ends of the filter capacitor group 1b, and a second end of the inductor *L*₂₁₄, a second end of the inductor *L*₂₁₅, and a second end of the inductor *L*₂₁₆ are sequentially connected to the three first ends of the safety capacitor group 2b and the three input ends of the three-phase off-grid load. The capacitor common end of the filter capacitor group 1b is connected to a first end of the switch *S*₃₁ by using a node 113, and a capacitor common end of the safety capacitor group 2b is connected to a second end of the switch *S*₃₁ by using a node 114.

When the three-phase off-grid load is a balanced load, the switch *S*₃₁ is turned off. In this case, the N wire of the three-phase off-grid load is not connected to the bus midpoint, and the inverter bridge arm 11a may be in the common-mode injection modulation mode. This improves working efficiency of the inverter. When the three-phase off-grid load is an unbalanced load, the switch *S*₃₁ is turned on, and the inverter bridge arm 11a can use only the SPWM modulation mode due to a limitation on which the N wire of the three-phase off-grid load is connected to the bus midpoint. Regardless of whether the switch *S*₃₁ is turned off or turned on, the bus midpoint, the inverter bridge arm 11a, the filter inductor unit 21a, and the filter capacitor group 1b may form a closed loop, most high-frequency harmonic waves generated by the inverter bridge arm 11a are absorbed by a filter element in the loop, and therefore, the three-phase load is less affected by harmonic noise during working. Regardless of whether the switch *S*₃₁ is turned off or turned on, the three-phase off-grid load and the safety capacitor group 2b may form a closed loop. Even if the inverter switches a working scenario, that is, the switch *S*₃₁ performs conversion of turn-off or turn-on, the safety capacitor group 2b can absorb a high-frequency harmonic wave generated by the load or the switch. Therefore, the three-phase off-grid load is less affected by harmonic noise. The second filter inductor unit 22b in this embodiment of this application is connected in series between the filter capacitor group 1b and the safety capacitor group 2b, which is equivalent to performing further filtering on the alternating current supplied to the three-phase off-grid load. Therefore, in this embodiment of this application, working efficiency of the inverter can be improved in a plurality of working scenarios of the inverter. This is very load-friendly.

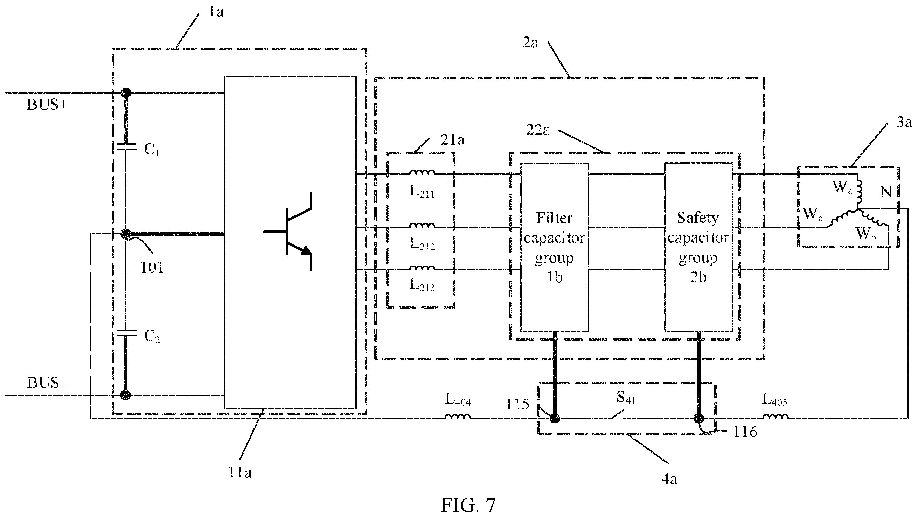

FIG. 7 shows Embodiment 4 of a circuit topology according to this application. Similarly, for brevity of description, the filter capacitor group 1b and the safety capacitor group 2b in FIG. 7 are omitted. For detailed content, refer to FIG. 5. The schematic diagram of the working principle of the inverter circuit provided in Embodiment 4 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, and the *Wₐ* phase input end, the *W_{b}* phase input end, the *W_{c}* phase input end of the three-phase off-grid load are sequentially connected to the first end of the filter capacitor unit 22a. The filter module 2a includes the filter inductor unit 21a and the filter capacitor unit 22a. The filter capacitor unit 22a includes two capacitor groups. The two capacitor groups include the filter capacitor group 1b and the safety capacitor group 2b. For composition and a connection manner of the filter capacitor group 1b and the safety capacitor group 2b, refer to the descriptions in FIG. 5. The controllable switch unit 4a includes a switch *S*₄₁. An inductor *L*₄₀₄ is connected in series between the switch *S*₄₁ and the bus midpoint, an inductor *L*₄₀₅ is connected in series between the switch *S*₄₁ and the N wire of the three-phase off-grid load, a first end of the switch *S*₄₁ is connected to a second end of the inductor *L*₄₀₄ and the common capacitor end of the filter capacitor group 1b by using a node 115, and a second end of the switch *S*₄₁ is connected to a first end of the inductor *L*₄₀₅ and the common capacitor end of the safety capacitor group 2b by using a node 116. A first end of the inductor *L*₄₀₄ is connected to the bus midpoint, and a second end of the inductor *L*₄₀₅ is connected to the N wire of the three-phase off-grid load.

When the three-phase off-grid load is a balanced load, the switch *S*₄₁ is turned off. In this case, the N wire of the three-phase off-grid load is not connected to the bus midpoint, and the inverter bridge arm 11a may be in the common-mode injection modulation mode. This improves working efficiency of the inverter. When the three-phase off-grid load is an unbalanced load, the switch *S*₄₁ is turned on, and the inverter bridge arm 11a can use only the SPWM modulation mode due to a limitation on which the N wire of the three-phase off-grid load is connected to the bus midpoint. Regardless of whether the switch *S*₄₁ is turned off or turned on, the bus midpoint, the inverter bridge arm 11a, the filter inductor unit 21a, the filter capacitor group 1b, and the inductor *L*₄₀₄ may form a closed loop, most high-frequency harmonic waves generated by the inverter bridge arm 11a are absorbed by a filter element in the loop, and therefore, the three-phase load is less affected by harmonic noise during working. Regardless of whether the switch *S*₄₁ is turned off or turned on, the three-phase off-grid load, the inductor *L*₄₀₅, and the safety capacitor group 2b may form a closed loop. Even if the inverter switches a working scenario, that is, the switch *S*₄₁ performs conversion of turn-off or turn-on, the safety capacitor group 2b can absorb a high-frequency harmonic wave generated by the load or the switch. Therefore, the three-phase off-grid load is less affected by harmonic noise. The inductor *L*₄₀₄ in this embodiment of this application is connected in series between the bus midpoint and the first end of the switch *S*₄₁, which is equivalent to adding a filtering element to the 1^{st} closed loop. This further enhances the filtering process. The inductor *L*₄₀₅ in this embodiment of this application is connected in series between the N wire of the three-phase off-grid load and the second end of the switch *S*₄₁, which is equivalent to adding a filtering element to the 2^{nd} closed loop. This further enhances the filtering process. Therefore, in this embodiment of this application, working efficiency of the inverter can be improved in a plurality of working scenarios of the inverter. This is very load-friendly.

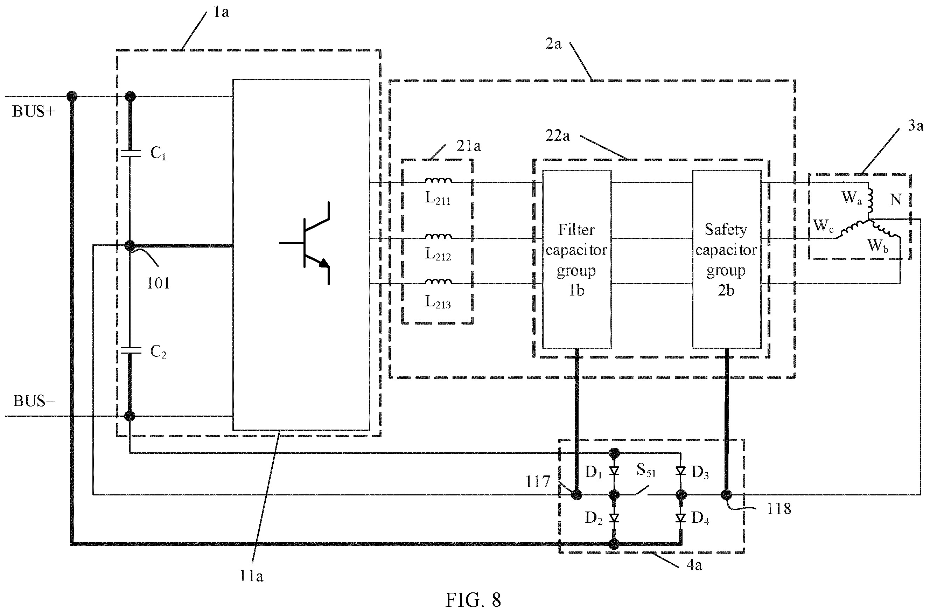

FIG. 8 shows Embodiment 5 of a circuit topology according to this application. Similarly, for brevity of description, the filter capacitor group 1b and the safety capacitor group 2b in FIG. 8 are omitted. For detailed content, refer to FIG. 5. The schematic diagram of the working principle of the inverter circuit provided in Embodiment 5 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, and the *Wₐ* phase input end, the *W_{b}* phase input end, the *W_{c}* phase input end of the three-phase off-grid load are sequentially connected to the first end of the filter capacitor unit 22a. The filter module 2a includes the filter inductor unit 21a and the filter capacitor unit 22a. The filter capacitor unit 22a includes two capacitor groups. The two capacitor groups include the filter capacitor group 1b and the safety capacitor group 2b. For composition and a connection manner of the filter capacitor group 1b and the safety capacitor group 2b, refer to the descriptions in FIG. 5. The controllable switch unit 4a includes a switch *S*₅₁ and four clamp diodes, and the four clamp diodes are a diode *D*₁, a diode *D*₂, a diode *D*₃, and a diode *D*₄ respectively. A first end of the switch *S*₅₁ is connected to the bus midpoint and the common capacitor end of the filter capacitor group 1b by using a node 117, and a second end of the switch *S*₅₁ is connected to the N wire of the three-phase off-grid load and the common capacitor end of the filter capacitor group 1b by using a node 118. The diode *D*₁ and the diode *D*₃ are connected in parallel, a positive electrode of the diode *D*₁ and a positive electrode of the diode *D*₃ are connected to the negative bus, a negative electrode of the diode *D*₁ is connected to the first end of the switch *S*₅₁, and a negative electrode of the diode *D*₃ is connected to the second end of the switch *S*₅₁. The diode *D*₂ and the diode *D*₄ are connected in parallel, a negative electrode of the diode *D*₂ and a negative electrode of the diode *D*₄ are connected to the positive bus, a positive electrode of the diode *D*₂ is connected to the first end of the switch *S*₅₁, and a positive electrode of the diode *D*₄ is connected to the second end of the switch *S*₅₁.

When the three-phase off-grid load is a balanced load, the switch *S*₅₁ is turned off. In this case, the N wire of the three-phase off-grid load is not connected to the bus midpoint, and the inverter bridge arm 11a may be in the common-mode injection modulation mode. This improves working efficiency of the inverter. When the three-phase off-grid load is an unbalanced load, the switch *S*₅₁ is turned on, and the inverter bridge arm 11a can use only the SPWM modulation mode due to a limitation on which the N wire of the three-phase off-grid load is connected to the bus midpoint. Regardless of whether the switch *S*₅₁ is turned off or turned on, the bus midpoint, the inverter bridge arm 11a, the filter inductor unit 21a, and the filter capacitor group 1b may form a closed loop, most high-frequency harmonic waves generated by the inverter bridge arm 11a are absorbed by a filter element in the loop, and therefore, the three-phase load is less affected by harmonic noise during working. Regardless of whether the switch *S*₅₁ is turned off or turned on, the three-phase off-grid load and the safety capacitor group 2b may form a closed loop. Even if the inverter switches a working scenario, that is, the switch *S*₅₁ performs conversion of turn-off or turn-on, the safety capacitor group 2b can absorb a high-frequency harmonic wave generated by the load or the switch. Therefore, the three-phase off-grid load is less affected by harmonic noise. This embodiment of this application further provides the four clamp diodes. When the switch *S*₅₁ works, voltages at two ends of the switch *S*₅₁ are unstable. The diode *D*₁ and the diode *D*₂ may clamp the first end of the switch *S*₅₁, and the diode *D*₃ and the diode *D*₄ may clamp the second end of the switch *S*₅₁ This ensures stable working of the switch *S*₅₁, and ensures normal and stable running of the inverter during on/off-grid working scenario switching. Therefore, in this embodiment of this application, working efficiency of the inverter can be improved in a plurality of working scenarios of the inverter. This is load-friendly, stable, and reliable.

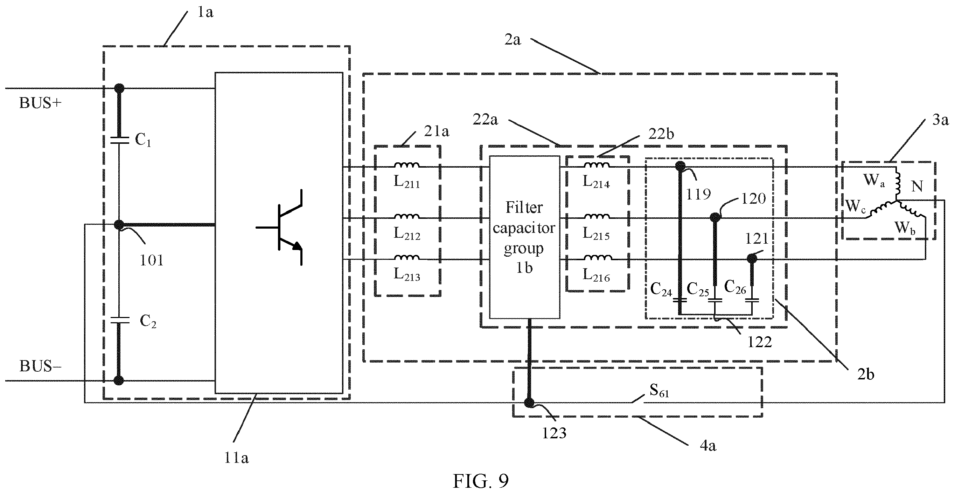

FIG. 9 shows Embodiment 6 of a circuit topology according to this application. For brevity of description, the filter capacitor group 1b in FIG. 9 is omitted. For detailed content, refer to FIG. 5. The schematic diagram of the working principle of the inverter circuit provided in Embodiment 6 of this application includes the inverter module 1a, the filter module 2a, the power-consuming module 3a, and the controllable switch unit 4a. The inverter module 1a is connected to the bus, the filter module 2a is connected between the inverter module 1 a and the power-consuming module 3 a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₆₁, and the switch *S*₆₁ is connected between the bus midpoint and the N wire of the three-phase off-grid load. The filter module 2a includes the filter inductor unit 21a and the filter capacitor unit 22a. The filter capacitor unit 22a includes two capacitor groups and the second filter inductor unit 22b. The two capacitor groups include the filter capacitor group 1b and the safety capacitor group 2b. For composition and a connection manner of the filter capacitor group 1b, refer to the descriptions in FIG. 5. The safety capacitor group 2b includes the three capacitors *C*₂₄, *C*₂₅, and *C*₂₆. The first end of the capacitor *C*₂₄ is connected between the output end of the filter inductor *L*₂₁₄ and the *Wₐ* phase input end of the three-phase off-grid load, the first end of the capacitor *C*₂₅ is connected between the output end of the filter inductor *L*₂₁₅ and the *W_{c}* phase input end of the three-phase off-grid load, the first end of the capacitor *C*₂₆ is connected between the output end of the third filter inductor *L*₂₁₆ and the *W_{b}* phase input end of the three-phase off-grid load, and the second ends of the capacitors *C*₂₄, *C*₂₅, and *C*₂₆ are connected to a capacitor common end by using a node 122. In this embodiment of this application, the second filter inductor unit 22b is connected in series between the filter capacitor group 1b and the safety capacitor group 2b in the filter inductor unit 22a. The second filter inductor unit 22b includes the inductor *L*₂₁₄, the inductor *L*₂₁₅, and the inductor *L*₂₁₆. The first end of the inductor *L*₂₁₄, the first end of the inductor *L*₂₁₅, and the first end of the inductor *L*₂₁₆ are sequentially connected to the three first ends of the filter capacitor group 1b, and the second end of the inductor *L*₂₁₄, the second end of the inductor *L*₂₁₅, and the second end of the inductor *L*₂₁₆ are sequentially connected to the three first ends of the safety capacitor group 2b and the three input ends of the three-phase off-grid load. The common capacitor end of the filter capacitor group 1b is connected to a first end of the switch *S*₆₁ by using a node 123. Compared with Embodiment 3, Embodiment 6 may be based on Embodiment 3. In some scenarios such as a test scenario, the safety capacitor group of Embodiment 6 only needs to filter out a differential-mode ripple component between live wires of a three-phase system.

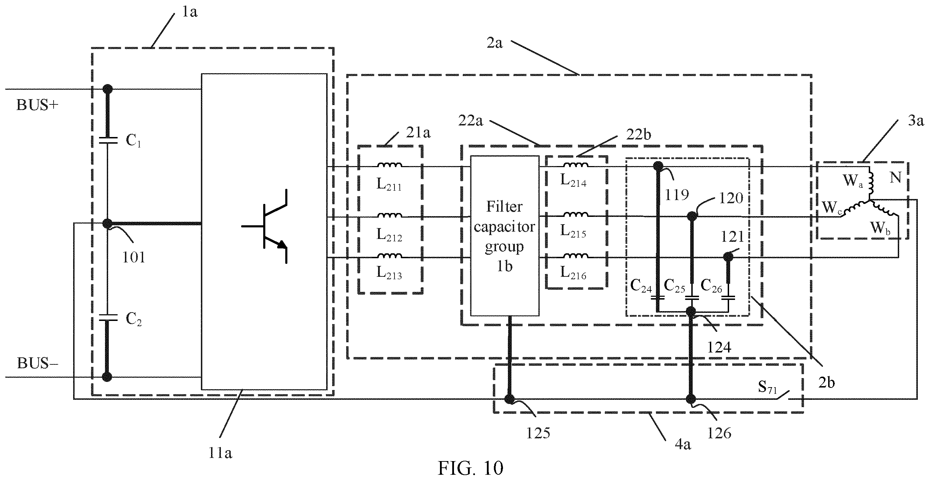

FIG. 10 shows Embodiment 7 of a circuit topology according to this application. For brevity of description, the filter capacitor group 1b in FIG. 10 is omitted. For detailed content, refer to FIG. 5. The schematic diagram of the working principle of the inverter circuit provided in Embodiment 7 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3 a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₇₁, and the switch *S*₇₁ is connected between the bus midpoint and the N wire of the three-phase off-grid load. The filter module 2a includes the filter inductor unit 21a and the filter capacitor unit 22a. The filter capacitor unit 22a includes two capacitor groups and the second filter inductor unit 22b. The two capacitor groups include the filter capacitor group 1b and the safety capacitor group 2b. For composition and a connection manner of the filter capacitor group 1b, refer to the descriptions in FIG. 5. The safety capacitor group 2b includes the three capacitors *C*₂₄, *C*₂₅, and *C*₂₆. The first end of the capacitor *C*₂₄ is connected between the output end of the filter inductor *L*₂₁₄ and the *Wₐ* phase input end of the three-phase off-grid load, the first end of the capacitor *C*₂₅ is connected between the output end of the filter inductor *L*₂₁₅ and the *W_{c}* phase input end of the three-phase off-grid load, the first end of the capacitor *C*₂₆ is connected between the output end of the third filter inductor *L*₂₁₆ and the *W_{b}* phase input end of the three-phase off-grid load, and the second ends of the capacitors *C*₂₄, *C*₂₅, and *C*₂₆ are connected to a capacitor common end by using a node 124. In this embodiment of this application, the second filter inductor unit 22b is connected in series between the filter capacitor group 1b and the safety capacitor group 2b in the filter inductor unit 22a. The second filter inductor unit 22b includes the inductor *L*₂₁₄, the inductor *L*₂₁₅, and the inductor *L*₂₁₆. The first end of the inductor *L*₂₁₄, the first end of the inductor *L*₂₁₅, and the first end of the inductor *L*₂₁₆ are sequentially connected to the three first ends of the filter capacitor group 1b, and the second end of the inductor *L*₂₁₄, the second end of the inductor *L*₂₁₅, and the second end of the inductor *L*₂₁₆ are sequentially connected to the three first ends of the safety capacitor group 2b and the three input ends of the three-phase off-grid load. The capacitor common end of the filter capacitor group 1b is connected to a first end of the switch *S*₇₁ by using a node 123, and the capacitor common end of the safety capacitor group 2b is connected to the first end of the switch *S*₇₁ by using a node 126. Compared with Embodiment 3, in Embodiment 7, a multi-stage LC filter circuit may be added on the basis of Embodiment 3, so that ripples of more frequency bands can be processed. This improves system running stability, and is more friendly to the user load.

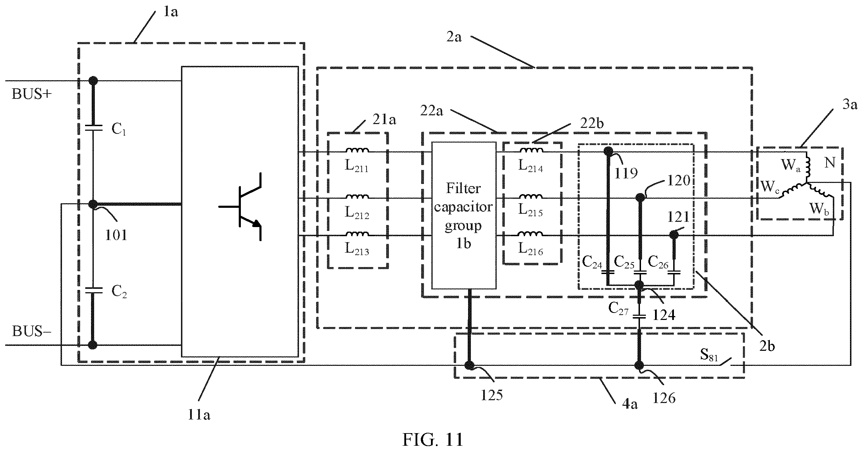

FIG. 11 shows Embodiment 8 of a circuit topology according to this application. For brevity of description, the filter capacitor group 1b in FIG. 11 is omitted. For detailed content, refer to FIG. 5. The schematic diagram of the working principle of the inverter circuit provided in Embodiment 8 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3 a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₈₁, and the switch *S*₈₁ is connected between the bus midpoint and the N wire of the three-phase off-grid load. The filter module 2a includes the filter inductor unit 21a and the filter capacitor unit 22a. The filter capacitor unit 22a includes two capacitor groups and the second filter inductor unit 22b. The two capacitor groups include the filter capacitor group 1b and the safety capacitor group 2b. For composition and a connection manner of the filter capacitor group 1b, refer to the descriptions in FIG. 5. The safety capacitor group 2b includes the three capacitors *C*₂₄, *C*₂₅, and *C*₂₆. The first end of the capacitor *C*₂₄ is connected between the output end of the filter inductor *L*₂₁₄ and the *Wₐ* phase input end of the three-phase off-grid load, the first end of the capacitor *C*₂₅ is connected between the output end of the filter inductor *L*₂₁₅ and the *W_{c}* phase input end of the three-phase off-grid load, the first end of the capacitor *C*₂₆ is connected between the output end of the third filter inductor *L*₂₁₆ and the *W_{b}* phase input end of the three-phase off-grid load, and the second ends of the capacitors *C*₂₄, *C*₂₅, and *C*₂₆ are connected to a capacitor common end by using the node 124. In this embodiment of this application, the second filter inductor unit 22b is connected in series between the filter capacitor group 1b and the safety capacitor group 2b in the filter inductor unit 22a. The second filter inductor unit 22b includes the inductor *L*₂₁₄, the inductor *L*₂₁₅, and the inductor *L*₂₁₆. The first end of the inductor *L*₂₁₄, the first end of the inductor *L*₂₁₅, and the first end of the inductor *L*₂₁₆ are sequentially connected to the three first ends of the filter capacitor group 1b, and the second end of the inductor *L*₂₁₄, the second end of the inductor *L*₂₁₅, and the second end of the inductor *L*₂₁₆ are sequentially connected to the three first ends of the safety capacitor group 2b and the three input ends of the three-phase off-grid load. The capacitor common end of the filter capacitor group 1b is connected to a first end of the switch *S*₈₁ by using a node 125, the capacitor common end 124 of the safety capacitor group 2b is connected to a node 126 by using a capacitor *C*₂₇ connected in series, and the node 126 is connected to the first end of the switch *S*₈₁. Compared with Embodiment 3, in Embodiment 8, on the basis of Embodiment 3, in some scenarios, the capacitor common end of the safety capacitor group may be connected to the N wire of the user load by using the capacitor *C*₂₇, so that both a common-mode ripple component and a differential-mode ripple component can be filtered out. This improves applicability of the entire system.

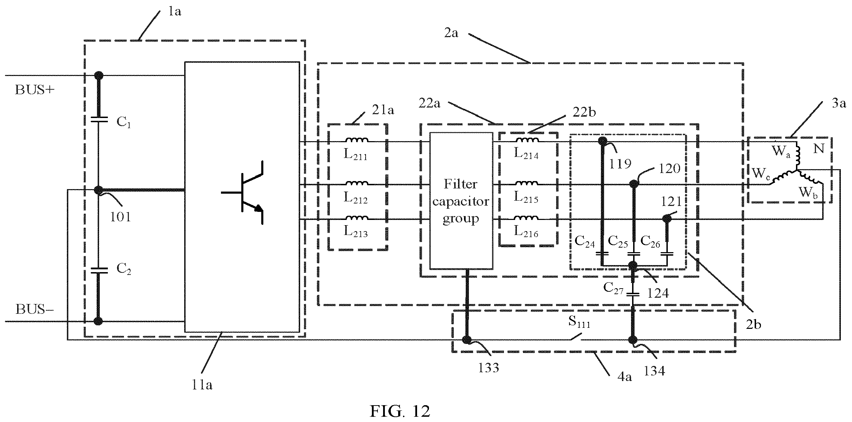

FIG. 12 shows Embodiment 9 of a circuit topology according to this application. For brevity of description, the filter capacitor group 1b in FIG. 12 is omitted. For detailed content, refer to FIG. 5. The schematic diagram of the working principle of the inverter circuit provided in Embodiment 9 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3 a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₁₁₁, and the switch *S*₁₁₁ is connected between the bus midpoint and the N wire of the three-phase off-grid load. The filter module 2a includes the filter inductor unit 21a and the filter capacitor unit 22a. The filter capacitor unit 22a includes two capacitor groups and the second filter inductor unit 22b. The two capacitor groups include the filter capacitor group 1b and the safety capacitor group 2b. For composition and a connection manner of the filter capacitor group 1b, refer to the descriptions in FIG. 5. The safety capacitor group 2b includes the three capacitors *C*₂₄, *C*₂₅, and *C*₂₆. The first end of the capacitor *C*₂₄ is connected between the output end of the filter inductor *L*₂₁₄ and the *Wₐ* phase input end of the three-phase off-grid load, the first end of the capacitor *C*₂₅ is connected between the output end of the filter inductor *L*₂₁₅ and the *W_{c}* phase input end of the three-phase off-grid load, the first end of the capacitor *C*₂₆ is connected between the output end of the third filter inductor *L*₂₁₆ and the *W_{b}* phase input end of the three-phase off-grid load, and the second ends of the capacitors *C*₂₄, *C*₂₅, and *C*₂₆ are connected to a capacitor common end by using the node 124. In this embodiment of this application, the second filter inductor unit 22b is connected in series between the filter capacitor group 1b and the safety capacitor group 2b in the filter inductor unit 22a. The second filter inductor unit 22b includes the inductor *L*₂₁₄, the inductor *L*₂₁₅, and the inductor *L*₂₁₆. The first end of the inductor *L*₂₁₄, the first end of the inductor *L*₂₁₅, and the first end of the inductor *L*₂₁₆ are sequentially connected to the three first ends of the filter capacitor group 1b, and the second end of the inductor *L*₂₁₄, the second end of the inductor *L*₂₁₅, and the second end of the inductor *L*₂₁₆ are sequentially connected to the three first ends of the safety capacitor group 2b and the three input ends of the three-phase off-grid load. The capacitor common end of the filter capacitor group 1b is connected to a first end of the switch *S*₁₁₁ by using a node 133, the capacitor common end 124 of the safety capacitor group 2b is connected to a node 134 by using the capacitor *C*₂₇ connected in series, and the node 134 is connected to a second end of the switch *S*₁₁₁. Compared with Embodiment 3, in Embodiment 9, on the basis of Embodiment 3, in some scenarios, the capacitor common end of the safety capacitor group may be connected to the N wire of the user load by using the capacitor *C*₂₇, so that both a common-mode ripple component and a differential-mode ripple component can be filtered out. This improves applicability of the entire system.

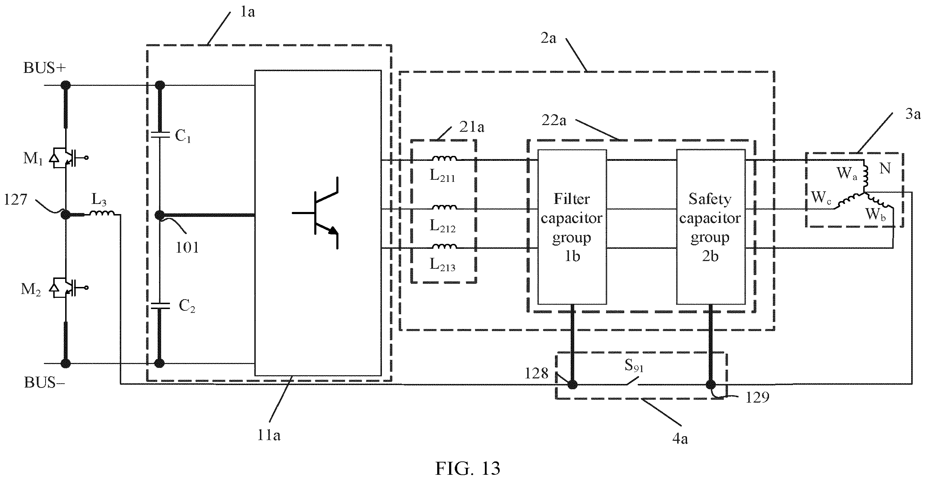

FIG. 13 shows Embodiment 10 of a circuit topology according to this application. For brevity of description, the filter capacitor group 1b and the safety capacitor group 2b in FIG. 13 are omitted. For detailed content, refer to FIG. 5. The schematic diagram of the working principle of the inverter circuit provided in Embodiment 10 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₉₁, and the switch *S*₉₁ is connected between the bus midpoint and the N wire of the three-phase off-grid load. The filter module 2a includes the filter inductor unit 21a and the filter capacitor unit 22a. The filter capacitor unit 22a includes two capacitor groups. The two capacitor groups include the filter capacitor group 1b and the safety capacitor group 2b. For composition and a connection manner of the filter capacitor group 1b and the safety capacitor group 2b, refer to the descriptions in FIG. 5. The capacitor common end of the filter capacitor group 1b is connected to a first end of the switch *S*₉₁ by using a node 128, and the capacitor common end of the safety capacitor group 2b is connected to a second end of the switch *S*₉₁ by using a node 129. In this embodiment, the inverter apparatus further includes a fourth bridge arm. The fourth bridge arm includes a switching transistor *M*₁ and a switching transistor *M*₂, two input ends of the fourth bridge arm are respectively connected to the positive direct current bus and the negative direct current bus, and an output end of the fourth bridge arm is connected to the first end of the switch *S*₉₁ through an inductor *L*₃. Compared with Embodiment 3, in Embodiment 10, on the basis of Embodiment 3, a current in the N wire of the user load is separately modulated by using the fourth bridge arm, which is very friendly to the user's loads with various characteristics, and improves applicability of the entire system.

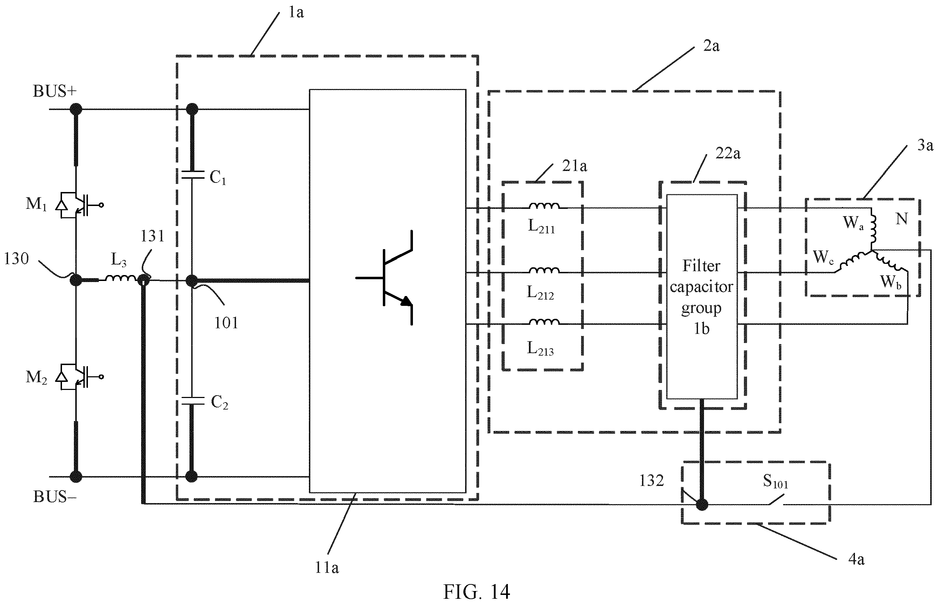

FIG. 14 shows Embodiment 11 of a circuit topology according to this application. For brevity of description, the filter capacitor group 1b in FIG. 14 is omitted. For detailed content, refer to FIG. 5. The schematic diagram of the working principle of the inverter circuit provided in Embodiment 11 of this application includes the inverter module 1a, the filter module 2a, the power-consuming module 3a, and the controllable switch unit 4a. The inverter module 1a is connected to the bus, the filter module 2a is connected between the inverter module 1a and the power-consuming module 3a, and the filter module 2a is further connected to the controllable switch unit 4a by using the filter capacitor unit 22a. The power-consuming module 3a includes the three-phase off-grid load, the *Wₐ* phase input end, the *W_{b}* phase input end, and the *W_{c}* phase input end of the three-phase off-grid load are sequentially connected to the first end of the filter capacitor unit 22a, and the N wire of the three-phase off-grid load is connected to the second end of the controllable switch unit 4a. The controllable switch unit 4a includes a switch *S*₁₀₁, and the switch *S*₁₀₁ is connected between the bus midpoint and the N wire of the three-phase off-grid load. The filter module 2a includes the filter inductor unit 21a and the filter capacitor unit 22a. The filter capacitor unit 22a includes the filter capacitor group 1b. For composition and a connection manner of the filter capacitor group 1b, refer to the descriptions in FIG. 5. The common capacitor end of the filter capacitor group 1b is connected to a first end of the switch *S*₁₀₁ by using a node 132. In this embodiment, the inverter apparatus further includes the fourth bridge arm. The fourth bridge arm includes the switching transistor *M*₁ and the switching transistor *M*₂, the two input ends of the fourth bridge arm are respectively connected to the positive direct current bus and the negative direct current bus, the output end of the fourth bridge arm is connected to the first end of the switch *S*₁₀₁ through the inductor *L*₃, and the output end of the fourth bridge arm is further connected to a midpoint 101 of the bus through the inductor *L*₃. Compared with Embodiment 3, in Embodiment 11, a loading capability of a positive and negative half-bus voltage equalization circuit for some specific half-wave energy loads can be increased by using the fourth bridge arm, and a bus ripple can also be reduced. This improves reliability and applicability of the entire system.

It should be noted that, the terms "first" and "second" are used for descriptive purposes only, and cannot be construed as indicating or implying relative importance.

Division into the units is merely logical function division and may be other division in actual implementation. For example, a plurality of units or components may be combined or integrated into another system, or some features may be ignored or not performed. In addition, the displayed or discussed connections between components may be implemented through some interfaces. The indirect couplings or communication connections between devices or units may be implemented in electronic, mechanical, or other forms.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An inverter apparatus, comprising: a direct current bus, a bus capacitor, an inverter bridge arm, a filter circuit, a switch unit, and a controller, wherein the direct current bus is connected to the inverter bridge arm, the bus capacitor is connected between a positive direct current bus and a negative direct current bus, the filter circuit is connected between the inverter bridge arm and a user load, and a common end of a filter capacitor group of the filter circuit is configured to connect to an N wire of the user load by using the switch unit; and
the controller is configured to control, based on different working states of the inverter apparatus, the switch unit to be turned on or off, so as to switch different modulation modes of the inverter bridge arm, wherein the different working states comprise an on-grid working state, an off-grid working state with a balanced load, and an off-grid working state with an unbalanced load.

2. The inverter apparatus according to claim 1, wherein the controller is specifically configured to:
when the inverter apparatus is in the off-grid working state with an unbalanced load, control the switch unit to be turned on, and control the inverter bridge arm to switch to a common SPWM modulation mode; and
when the inverter apparatus is in the on-grid working state, control the switch unit to be turned off, and control the inverter bridge arm to switch to a common-mode injection modulation mode.

3. The inverter apparatus according to claim 1, wherein the controller is specifically configured to:
when the inverter apparatus is in the off-grid working state with an unbalanced load, control the switch unit to be turned on, and control the inverter bridge arm to switch to a common SPWM modulation mode; and
when the inverter apparatus is in the off-grid working state with a balanced load, control the switch unit to be turned off, and control the inverter bridge arm to switch to a common-mode injection modulation mode.

4. The inverter apparatus according to any one of claims 1 to 3, wherein the common end of the filter capacitor group of the filter circuit is further connected to a midpoint of the bus capacitor

5. The inverter apparatus according to any one of claims 1 to 3, wherein the inverter apparatus further comprises a fourth bridge arm, an input end of the fourth bridge arm is separately connected to the positive direct current bus and the negative direct current bus, and the common end of the filter capacitor group of the filter circuit is further configured to connect to an output end of the fourth bridge arm.

6. The inverter apparatus according to any one of claims 1 to 5, wherein the filter circuit comprises a first filter inductor unit and a filter capacitor unit;
the first filter inductor unit comprises three filter inductors, and first ends of the three filter inductors of the first filter inductor unit are sequentially connected to three output ends of the inverter bridge arm;
the filter capacitor unit comprises the filter capacitor group, the filter capacitor group comprises three filter capacitors, first ends of the three filter capacitors of the filter capacitor group are sequentially connected to second ends of the three filter inductors of the first filter inductor unit, and second ends of the three filter capacitors of the filter capacitor group are connected to the common end of the filter capacitor group; and
a first end of the switch unit is connected to the midpoint of the bus capacitor by using the common end of the filter capacitor group, and a second end of the switch unit is configured to connect to the N wire of the user load.

7. The inverter apparatus according to any one of claims 1 to 5, wherein the filter circuit comprises a first filter inductor unit, a filter capacitor unit, and the fourth bridge arm;
the first filter inductor unit comprises three filter inductors, and first ends of the three filter inductors of the first filter inductor unit are sequentially connected to three output ends of the inverter bridge arm;
the filter capacitor unit comprises the filter capacitor group, the filter capacitor group comprises three filter capacitors, first ends of the three filter capacitors of the filter capacitor group are sequentially connected to second ends of the three filter inductors of the first filter inductor unit, and second ends of the three filter capacitors of the filter capacitor group are connected to the common end of the filter capacitor group; and
the fourth bridge arm is connected between the positive direct current bus and the negative direct current bus, the output end of the fourth bridge arm is connected to a first end of the switch unit and the common end of the filter capacitor group through an inductor, and a second end of the switch unit is configured to connect to the N wire of the user load.

8. The inverter apparatus according to claim 6 or 7, wherein the filter capacitor unit further comprises a safety capacitor group; and
the safety capacitor group comprises three filter capacitors, first ends of the three filter capacitors of the safety capacitor group are sequentially configured to connect to three input ends of the user load, and second ends of the three filter capacitors of the safety capacitor group are connected to a common end of the safety capacitor group.

9. The inverter apparatus according to claim 8, wherein the common end of the safety capacitor group is connected to the second end of the switch unit, or
the common end of the safety capacitor group is connected to the first end of the switch unit.

10. The inverter apparatus according to claim 8 or 9, wherein the common end of the safety capacitor group is connected to the first end or the second end of the switch unit by using a capacitor.

11. The inverter apparatus according to any one of claims 8 to 10, wherein the filter circuit further comprises a second filter inductor unit, the second filter inductor unit comprises three filter inductors, and the three filter inductors of the second filter inductor unit are respectively connected between the first ends of the three filter capacitors of the filter capacitor group and the first ends of the three filter capacitors of the safety capacitor group.

12. The inverter apparatus according to claim 6, wherein an inductor is connected in series between the first end of the switch unit and the midpoint of the bus capacitor, and an inductor is connected in series between the second end of the switch unit and the N wire of the user load.

13. The inverter apparatus according to any one of claims 1 to 12, wherein the inverter apparatus comprises two groups of clamp diodes, any group in the two groups of clamp diodes comprises two diodes connected in series, positive electrodes of the two diodes are connected to the negative direct current bus, negative electrodes of the two diodes are connected to the positive direct current bus, and the first end and the second end of the switch unit are respectively connected between the two groups of clamp diodes.

14. The inverter apparatus according to claim 5, wherein the fourth bridge arm comprises a two-level bridge arm or a multi-level bridge arm, and the output end of the fourth bridge arm is connected to the midpoint of the bus capacitor through an inductor

15. A control method for an inverter apparatus, wherein the control method comprises:
when the inverter apparatus is in an off-grid working state with an unbalanced load, controlling a switch unit to be turned on, and controlling an inverter bridge arm to switch to a common SPWM modulation mode, wherein the inverter apparatus comprises the switch unit and the inverter bridge arm, a first end of the switch unit is connected to a midpoint input end of the inverter bridge arm, and a second end of the switch unit is connected to an output of the inverter bridge arm by using a filter circuit; and
when the inverter apparatus is in an on-grid working state or an off-grid working state with a balanced load, controlling the switch unit to be turned off, and controlling the inverter bridge arm to switch to a common-mode injection modulation mode, wherein the inverter apparatus comprises the switch unit and the inverter bridge arm, the first end of the switch unit is connected to the midpoint input end of the inverter bridge arm, and the second end of the switch unit is connected to the output of the inverter bridge arm by using the filter circuit.
